(19) Europäisches Patentamt
European Patent Office
Office européen des brevets

(11) **EP 4 159 308 A1**

(12) **EUROPEAN PATENT APPLICATION**
published in accordance with Art. 153(4) EPC

(43) Date of publication:
**05.04.2023 Bulletin 2023/14**

(21) Application number: **21818324.2**

(22) Date of filing: **01.06.2021**

(51) International Patent Classification (IPC):
**B01J 20/28** (2006.01)   **B01D 53/04** (2006.01)
**B01J 20/26** (2006.01)   **B01J 20/34** (2006.01)
**C01B 32/50** (2017.01)

(52) Cooperative Patent Classification (CPC):
**B01D 53/04; B01J 20/26; B01J 20/28; B01J 20/34;
C01B 32/50**

(86) International application number:
**PCT/JP2021/020776**

(87) International publication number:
**WO 2021/246383 (09.12.2021 Gazette 2021/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.06.2020  JP 2020096072**

(71) Applicant: **NITTO DENKO CORPORATION**
**Ibaraki-shi**
**Osaka 567-8680 (JP)**

(72) Inventors:
• **MATSUDA Koso**
  **Ibaraki-shi, Osaka 567-8680 (JP)**
• **SUZUKI Satoru**
  **Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **ACID GAS ADSORPTION AND DESORPTION MATERIAL**

(57)    Provided is an acid gas adsorption and desorption material which is capable of satisfying both excellent durability and high adsorption and desorption amounts, and is also good in terms of desorption energy. The acid gas adsorption and desorption material has acid gas adsorption and desorption capabilities and is capable of adsorbing 0.35 mmol/g or more of acid gas within 15 hours under one or more acid gas adsorption conditions, in an atmosphere whose acid gas concentration is 400 ppm $\pm$ 10 ppm, and then desorbing 50% or more of the adsorbed acid gas within 1.5 hours under one or more acid gas desorption conditions.

EP 4 159 308 A1

**Description**

TECHNICAL FIELD

The present invention relates to an acid gas adsorption and desorption material. In particular, the present invention relates to an acid gas adsorption and desorption material usable in technologies that make it possible to directly capture acid gas generated from energy use or present in atmospheric air, and store or utilize the captured acid gas.

BACKGROUND ART

Measures to prevent global warming have become an important issue for countries all over the world to tackle with utmost effort. In particular, under the Paris Agreement, an international framework on climate change issues after 2020 that was agreed upon at the Conference of the Parties to the United Nations Framework Convention on Climate Change (commonly known as COP) held in Paris in 2015 and entered into force in November 2016, each party is strongly promoting "carbon reduction" policies to reduce emissions of greenhouse gases (GHGs), including $CO_2$, in regard to energy supply and use.

In order to reduce energy-derived $CO_2$ emissions, "carbon reduction in energy supply" and "energy saving" are necessary. Here, with regard to the "carbon reduction in energy supply", efforts to increase the ratio of "non-fossil power sources", such as renewable energy and nuclear energy, which are small in $CO_2$ emissions, or, to, when fossil fuels are used, shift from conventional coal and petroleum oil to low-carbon fuels such as gas, are being promoted.

Technologies for carbon reduction in energy supply, such as renewable energy and nuclear energy, are intended to reduce $CO_2$ to be generated from energy use.

On the other hand, technologies based on the premise that $CO_2$ is generated, such as $CO_2$ capture and storage (CCS) technologies for capturing the generated $CO_2$ before being released to atmospheric air and storing the captured $CO_2$ in the ground or the like so as to prevent the generated $CO_2$ from accumulating in atmospheric air, and $CO_2$ capture and use (CCU) technologies for utilizing the generated $CO_2$ in raw material production, etc., are also studied.

In these CCS and CCU technologies, direct air capture (DAC) technologies are studied as the technologies for capturing the generated $CO_2$. It is conceived that such DAC technologies can be used to directly capture, from atmospheric air, $CO_2$ which has already accumulated in atmospheric air, thereby reducing $CO_2$ from atmospheric air. When used in this manner, the DAC technologies are referred to occasionally as "negative emission technologies (NETs)"

Examples of the DAC technologies include a technology using a DAC apparatus comprising an acid gas adsorption and desorption material that has a function of adsorbing an acid gas such as $CO_2$, e.g., a function of a $CO_2$ adsorbent, and further can desorb the adsorbed acid gas. This apparatus is configured to enable the acid gas adsorption and desorption material to adsorb acid gas for a given period of time, and then apply energy such as heat or pressure to the acid gas adsorption and desorption material with acid gas adsorbed thereon, thereby desorbing a high concentration of acid gas from the acid gas adsorption and desorption material, wherein the apparatus is operable to repeatedly perform this acid gas adsorption-desorption cycle. For example, in a case where the DAC apparatus is used to capture, directly from atmospheric air, $CO_2$ that is present in atmospheric air at a concentration of about 400 ppm, it is conceived that the $CO_2$ is adsorbed for about 4 hours under a $CO_2$ adsorption condition in which temperature is maintained at about 25°C, and then the adsorbed $CO_2$ is desorbed for about 1 hour under a $CO_2$ desorption condition in which temperature is maintained at 100°C, wherein this adsorption-desorption cycle is repeated.

Properties required for the acid gas adsorption and desorption material used for the DAC technologies are considered to include: high durability to enable the acid gas adsorption-desorption cycle to be repeated over a long period of time; high adsorption capability to adsorb a large amount of acid gas under an adsorption condition; low-energy desorption capability to enable a high concentration of acid gas to be desorbed using less energy under a desorption condition; rapid adsorption and desorption capabilities to enable reducing a time required for adsorbing acid gas under an adsorption condition and desorbing the adsorbed acid gas under a desorption condition; and low-cost property to enable reducing cost required for capturing a unit amount of acid gas.

Heretofore, as the acid gas adsorption and desorption material used for the DAC technologies, there has been known an acid gas adsorption and desorption material in which pore surfaces of a porous carrier is modified with an amine compound.

For example, WO 2017/009241 (Patent Document 1) discloses amine-functionalized fibrillated cellulose for reversible $CO_2$ adsorption from from exhaust gases or ambient air, wherein the amine-functionalized fibrillated cellulose has a bulk density of at least 150 kg/m³.

It is allegedly described that when performing adsorption at a $CO_2$ partial pressure of 40 to 50 Pa under temperature and humidity conditions of 30°C and 60%RH and then performing desorption in a flow of humidified nitrogen, the above amine-functionalized fibrillated cellulose has an equilibrium $CO_2$ adsorption capability of at least 0.8 mmol $CO_2$/g.

Further, US-B 7767004 (Patent Document 2) discloses a re-generable acid-gas adsorbent comprising a pore-expanded mesoporous support material having a pore volume of 0.7 to 3.6 cc/g, a median pore diameter of 1 to 25 nm, and a BET surface area of 500 to 1600 $m^2/g$, wherein the support material is functionalized by adding acid-gas reactive functional groups such as an amino group within the pores of the support material.

It is allegedly described that the performance of this material is characterized by an equilibrium weight gain of $CO_2$ in the range of 3 to 30 weight % when exposed to a 5% $C_2/N_2$ mixture at atmospheric pressure and an atmospheric temperature (25°C), and when the material is subjected to repeated adsorption-desorption cycling, a thermal spike of 75 to 150°C is applied.

This type of acid gas adsorption and desorption material did not provide excellent properties, because all the required properties thereof are ordinary.

There has also been known an acid gas adsorption and desorption material in which a low-molecular-weight amine compound is filled in pores of a porous carrier.

For example, JP-A 2018-509280 (Patent Document 3) discloses a solid adsorbent for adsorbing carbon dioxide from a gas mixture, wherein the solid adsorbent comprises modified polyamine supported on and in a solid support, or bound to the solid support, and wherein the modified polyamine is a reaction product of amine and epoxide.

The support comprises primary particles having a particle size of less than 1,000 nm, preferably less than about 100 nm. It is allegedly described that the solid adsorbent enables a wide range of $CO_2$ adsorption capability for use for various natural and industrial gas sources, and can adsorb over a temperature range of, e.g., 0 to 100°C, e.g., in normal flow system or in a fixed, movable or fluidized adsorption bed, wherein the adsorbed $CO_2$ is released, e.g., by heating the adsorbent at a temperature of about 25°C to about 120°C, or by exposing it to reduced pressure or the like.

This type of acid gas adsorption and desorption material was excellent in terms of $CO_2$ adsorption and desorption amounts and desorption energy, but had a problem with durability.

Further, there has been proposed an acid gas adsorption and desorption material comprising a cross-linked product of an amine compound and an epoxy compound.

For example, with a view to capturing carbon dioxide contained in exhaust gas with a carbon dioxide concentration of about 10%, etc., JP-A 2017-047412 (Patent Document 4) discloses an acid gas adsorption material comprising a cross-linked product of a polyfunctional glycidyl ether-type solid epoxy compound, and an amine compound having a primary or secondary aliphatic amino group.

It is allegedly described that from a viewpoint of excellent thermal stability of the acid gas adsorption material, the glass-transition temperature of the acid gas adsorption material is preferably 100°C or more, more preferably 150°C or more, still more preferably 200°C or more, and may be, e.g., 250°C or less. It is allegedly described that the temperature of the acid gas adsorption material during adsorption may be, e.g., 20 to 100°C, and the temperature of the acid gas adsorption material during desorption may be, e.g., 80 to 200°C.

Further, US-B 8557027 (Patent Document 5) discloses an acid gas adsorption and desorption material comprising a crosslinked epoxy-amine material having a weight-average molecular weight of about 500 to about $1 \times 10^6$, a total pore volume of about 0.2 to about 2.0 cubic centimeters per gram (cc/g), wherein the acid gas adsorption and desorption material has an adsorption capability of at least about 0.2 mmol per gram of the adsorption and desorption material.

It is allegedly described that adsorption is performed at a pressure of about 0.1 bar to about 300 bar and at a temperature of greater than about 80°C, and desorption is performed at a pressure of about 50 millibar to about 75 bar and at a temperature of greater than about 80°C.

This type of acid gas adsorption and desorption material was excellent in terms of durability, but had a problem with adsorption and desorption amounts and adsorption and desorption speeds of $CO_2$.

CITATION LIST

[Patent Document]

Patent Document 1: WO 2017/009241
Patent Document 2: US-B 7767004
Patent Document 3: JP-A 2018-509280
Patent Document 4: JP-A 2017-047412
Patent Document 5: US-B 8557027

SUMMARY OF INVENTION

[Technical Problem]

However, currently, no low-cost acid gas adsorption and desorption material has been obtained which is excellent in terms of durability while exhibiting good adsorption and desorption amounts and adsorption and desorption speeds of acid gas, and capable of achieving these required properties with low desorption energy. In particular, it has heretofore been difficult to satisfy both the durability of the acid gas adsorption and desorption material and the adsorption and desorption amounts of acid gas, because they are in a trade-off relationship, and it is not easy to further reduce the desorption energy.

That is, a technical problem to be solved by the present invention is to provide an acid gas adsorption and desorption material that makes it possible to satisfy both excellent durability and high adsorption and desorption amounts, and is also good in terms of desorption energy.

[Solution to Technical Problem]

As a result of diligent researches, the present inventors have found, for the first time, that it is possible to obtain an acid gas adsorption and desorption material capable of adsorbing a large amount of acid gas under one or more acid gas adsorption conditions and desorbing a large percentage of the adsorbed acid gas within a relatively short period of time under one or more acid gas desorption conditions, and have completed the present invention.

Specifically, according to a first aspect of the present invention, there is provided an acid gas adsorption and desorption material having acid gas adsorption and desorption capabilities, wherein the acid gas adsorption and desorption material is capable of adsorbing 0.35 mmol/g or more of acid gas within 15 hours under one or more acid gas adsorption conditions, in an atmosphere whose acid gas concentration is 400 ppm $\pm$ 10 ppm, and then desorbing 50% or more of the adsorbed acid gas within 1.5 hours under one or more acid gas desorption conditions.

In the first aspect of the present invention, the one or more acid gas adsorption conditions may include a temperature condition of 23°C, and the one or more acid gas desorption conditions may include a temperature condition of 50°C.

Further, each of the one or more acid gas adsorption conditions and the one or more acid gas desorption conditions may include a pressure condition of an atmospheric pressure or more.

The one or more acid gas adsorption conditions may include a humidity condition of 50%RH.

The one or more acid gas adsorption conditions may include an acid gas supply flow rate of 300 ml/min.

Preferably, in the first aspect of the present invention, the acid gas adsorption and desorption material has a weight retention ratio of 90% or more, as measured after being left for 500 hours under temperature and humidity conditions of 85°C and 10%RH.

Preferably, in the first aspect of the present invention, the acid gas adsorption and desorption material is capable of desorbing 0.35 mmol/g or more of acid gas within 1.5 hours under the one or more acid gas desorption conditions.

Preferably, in the first aspect of the present invention, the acid gas adsorption and desorption material consists primarily of an amine-containing resin.

According to a second aspect of the present invention, there is provided an acid gas adsorption and desorption material which consists primarily of an amine-containing resin having a glass transition temperature of 40°C or less, and has a specific surface area of 1 $m^2$/g or more.

Preferably, in the second aspect of the present invention, the amine-containing resin comprises an amine monomer component and an epoxy monomer component.

Preferably, in the second aspect of the present invention, the amine-containing resin has an amine density of 8 mmol/g or more.

Preferably, in the second aspect of the present invention, the amine-containing resin has an in-resin acid gas diffusion rate of 1.2 or more.

Preferably, in the second aspect of the present invention, the amine-containing resin has a porous structure.

[Effect of Invention]

The acid gas adsorption and desorption material of the present invention is capable of satisfying both excellent durability and high adsorption and desorption amounts, and is also good in terms of desorption energy, so that it is useful as a material usable for technologies that make it possible to directly capture acid gas generated from energy use or present in atmospheric air, and store or utilize the captured acid gas.

DESCRIPTION OF EMBODIMENTS

An acid gas adsorption and desorption material according to the present invention has acid gas adsorption and desorption capabilities, wherein the acid gas adsorption and desorption material is capable of adsorbing 0.35 mmol/g or more of acid gas within 15 hours under one or more acid gas adsorption conditions, in an atmosphere whose acid gas concentration is 400 ppm $\pm$ 10 ppm, and then desorbing 50% or more of the adsorbed acid gas within 1.5 hours under one or more acid gas desorption conditions.

[Acid Gas Adsorption Capability]

Firstly, the acid gas adsorption and desorption material according to the present invention is capable of adsorbing 0.35 mmol/g or more of acid gas within 15 hours under one or more acid gas adsorption conditions, in an atmosphere whose acid gas concentration is 400 ppm $\pm$ 10 ppm.

The acid gas adsorption and desorption material according to the present invention exhibits high adsorption capability in an atmosphere having a low acid-gas concentration and assuming that $CO_2$ which is present in atmospheric air in a concentration of about 400 ppm is captured directly from atmospheric air using a DAC apparatus, specifically in an atmosphere whose acid gas concentration is 400 ppm $\pm$ 10 ppm.

The acid gas adsorption and desorption material is configured to be capable of adsorbing preferably 0.40 mmol/g or more of acid gas, more preferably 0.50 mmol/g or more of acid gas, within 15 hours under one or more acid gas adsorption conditions, in an atmosphere whose acid gas concentration is 400 ppm $\pm$ 10 ppm.

The acid gas adsorption capability of the acid gas adsorption and desorption material may be evaluated by: weighing an acid gas adsorption and desorption material subjected to vacuum drying, etc., as needed; filling a container with the weighed acid gas adsorption and desorption material; in order to remove acid gas (hereinafter referred to as "$CO_2$" as one example thereof) and water which have been adsorbed on the acid gas adsorption and desorption material, supplying a preparation gas to the acid gas adsorption and desorption material in the container by a $CO_2$ circulation testing device to which the container filled with the acid gas adsorption and desorption material is connected, so as to perform pre-desorption until the acid gas adsorption and desorption material reaches a stable state; and then holding an adsorption state for a given period of time, under one or more acid gas adsorption conditions, while monitoring respective $CO_2$ concentrations at an inlet and outlet of the container, and from the amount of the preparation gas which has passed through the container until the elapse of the given period of time, a difference between the respective $CO_2$ concentrations at the inlet and outlet of the container, and the weight of the acid gas adsorption and desorption material, calculating the amount of acid gas adsorbed within the given period of time (in the present invention, 15 hours).

In the acid gas adsorption and desorption material according to the present invention, a temperature condition in the one or more acid gas adsorption conditions may be set to a relatively low temperature, for example, to a temperature of less than 90°C, or to a lower temperature of less than 50°C.

The temperature condition in the one or more acid gas adsorption conditions may be set to an ambient temperature, for example, to 23°C.

A pressure condition in the one or more acid gas adsorption conditions may be an atmospheric pressure, or may be a pressure equal to or greater than the atmospheric pressure

A humidity condition in the one or more acid gas adsorption conditions is not particularly limited, but may be set to 50%RH (Relative Humidity).

An acid gas supply flow rate in the one or more acid gas adsorption conditions is not particularly limited, but may be set to 300 ml/min.

[Acid Gas Desorption Capability]

Secondly, the acid gas adsorption and desorption material according to the present invention is capable of desorbing 50% or more of the adsorbed acid gas within 1.5 hours under one or more acid gas desorption conditions.

The acid gas adsorption and desorption material is configured to be capable of adsorbing preferably 60% or more of the adsorbed acid gas, more preferably, 70% or more of the adsorbed acid gas, most preferably, 80% or more of the adsorbed acid gas, within 1.5 hours under one or more acid gas desorption conditions.

The acid gas desorption capability of the acid gas adsorption and desorption material may be evaluated by: placing a container filled with an acid gas adsorption and desorption material on which acid gas (hereinafter referred to as "$CO_2$" as one example thereof) has been adsorbed through the procedure for evaluating the acid gas adsorption capability, or the like, under one or more acid gas desorption conditions; holding a desorption state for a given period of time, while monitoring respective $CO_2$ concentrations at the inlet and outlet of the container, and from the amount of gas which has passed through the container until the elapse of the given period of time, a difference between the respective $CO_2$ concentrations at the inlet and outlet of the container, and the weight of the acid gas adsorption and desorption material, calculating the amount of acid gas desorbed within the given period of time (in the present invention, 1.5 hours); and then calculating a $CO_2$ desorption ratio from the following formula: $CO_2$ desorption ratio = $CO_2$ desorption amount / $CO_2$ adsorption amount.

A temperature condition in the one or more acid gas desorption conditions may be set to a temperature greater than that in the one or more acid gas adsorption conditions, for example, to 50°C.

A pressure condition in the one or more acid gas desorption conditions may be set to a pressure less than that in the one or more acid gas adsorption conditions, may be set to a reduced pressure equal to or less than an atmospheric pressure.

The acid gas adsorption and desorption material is configured to be capable of desorbing preferably 0.35 mmol/g or more of acid gas, more preferably 0.50 mmol/g or more of acid gas, within 1.5 hours under one or more acid gas desorption conditions.

Since the acid gas adsorption and desorption material according to the present invention exhibits excellent acid gas adsorption and desorption capabilities at a relatively low temperature, etc., it is considered to have improved durability.

The heat resistance of the acid gas adsorption and desorption material may be evaluated based on a weight retention ratio obtained by holding the acid gas adsorption and desorption material under given temperature and humidity conditions for a given period of time, and calculating the ratio of the weight of the acid gas adsorption and desorption material retained after the elapse of the given period of time to an initial weight thereof, as the weight retention ratio.

Preferably, the acid gas adsorption and desorption material according to the present invention has a weight retention ratio of 90% or more, as measured after being left for 500 hours under temperature and humidity conditions of 85°C and 10%RH.

The acid gas adsorption and desorption material according to the present invention is characterized in that it exhibits acid gas adsorption and desorption capabilities which could not previously be obtained, wherein a material composition thereof is not particularly limited, but may consists primarily of an amine-containing resin.

The present invention also provides an acid gas adsorption and desorption material which consists primarily of an amine-containing resin having a glass transition temperature of 40°C or less, and has a specific surface area of 1 $m^2$/g or more.

Although not bound by any theory, it is considered that, since the acid gas adsorption and desorption material according to the present invention consists primarily of a resin having a glass transition temperature less than those in conventional acid gas adsorption and desorption materials, it is high in terms of the after-mentioned in-resin acid gas diffusion rate, thereby achieving good acid gas adsorption and desorption amounts, and since the acid gas adsorption and desorption material according to the present invention has a relatively-large specific surface area, it realizes excellent acid gas adsorption and desorption speeds.

The glass transition temperature of the resin as a primary component of the acid gas adsorption and desorption material according to the present invention can be obtained by calorimetric analysis such as differential scanning calorimetry (DSC). The glass transition temperature of the resin as a primary component of the acid gas adsorption and desorption material according to the present invention is preferably 30°C or less, more preferably 20°C or less, most preferably 10°C or less.

The specific surface area of the acid gas adsorption and desorption material according to the present invention can be obtained, e.g., by measuring the BET specific surface area thereof by a nitrogen adsorption BET method complying with JIS Z 8830, using a commercially-available specific surface area measuring device. Preferably, the specific surface area of the acid gas adsorption and desorption material according to the present invention is 1.5 $m^2$/g or more.

Preferably, in the acid gas adsorption and desorption material according to the present invention, the amine-containing resin has an amine density of 8 mmol/g or more.

The amine density of the amine-containing resin can be obtained by measuring the weight percentages of CHN elements using a commercially-available CHN elemental analyzer, and assigning the obtained weight % of N element and the atomic weight of N to the following formula: amine density [mmol/g] = weight% of N element / atomic weight of N / 100 $\times$ 1000.

The present inventors have found that there is a positive correlation between a product of the amine density and the amount of secondary amine in the amine-containing resin, and each of the acid gas adsorption and desorption amounts. Therefore, it is consider that the acid gas adsorption and desorption material according to the present invention is desirable to have a higher amine density of the amine-containing resin, and a larger amount of secondary amine in the amine-containing resin, as mentioned above.

In the acid gas adsorption and desorption material according to the present invention, the amine-containing resin has an in-resin acid gas diffusion rate of preferably 1.2 or more, more preferably 1.5 or more.

The in-resin acid gas diffusion rate of the amine-containing resin in the acid gas adsorption and desorption material according to the present invention can be obtained from the following formula: in-resin acid gas diffusion rate = amine utilization rate / specific surface areas, wherein the amine utilization rate can be calculated from the following formula: amine utilization rate = acid gas adsorption amount (at 23°C within 1 hour) / amine density × 100.

Preferably in the acid gas adsorption and desorption material according to the present invention, the amine-containing resin comprises: an amine monomer component (i.e., a portion derived from an amine monomer forming the resin); and an epoxy monomer component (i.e., a portion derived from an amine monomer forming the resin).

[Amine Monomer]

Examples of an amine compound usable as an amine monomer for polymerizing the amine-containing resin constituting a primary component of the acid gas adsorption and desorption material according to the present invention (constituting a large portion, e.g., 60 weight% or more, preferably 70 weight% or more, more preferably 80 weight% or more, most preferably 90 weight% or more, of the acid gas adsorption and desorption material) include ethylamine, ethylene diamine, diethylene triamine, triethylenetetramine, tris(2-aminoethyl)amine, N,N'-bis(3-aminopropyl)ethylenediamine, and piperazine. These may be used independently, or two or more of them may be used in combination.

As the amine compound, aliphatic amines (e.g., ethylene diamine, 1,4-butanediamine, 1,5-pentanediamine, 1,6-hexanediamine (1,6-diaminohexane), 1,7-heptanediamine, 1,8-Octanediamine, diethylenetriamine, triethylenetetramine, tetraethylenepentamine, imino-bis-propylamine, bis(hexamethylene)triamine, 1, 3, 6-trisaminomethylhexane, polymethylene diamine, trimethylhexamethylenediamine, and polyether diamine), alicyclic amines (e.g., isophoronediamine, menthanediamine, N-aminoethylpiperazine, 3,9-bis(3-aminopropyl)-2,4,8,10-tetraoxaspiro(5,5)undecane adduct, bis(4-amino-3-methylcyclohexyl) methane, and bis(4-aminocyclohexyl)methane, and their modified products), and aliphatic polyamidoamine including polyamines and dimer acids, may be suitably used. These may be used independently, or two or more of them may be used in combination.

The amine monomer may comprise any of a primary amine, a secondary amine and a tertiary amine. Among them, in a portion derived from an amine monomer forming the amine-containing resin in the acid gas adsorption and desorption material according to the present invention, a tertiary amine is considered to poorly contribute to the acid gas adsorption capability of the acid gas adsorption and desorption material according to the present invention. On the other hand, it is considered that a primary amine largely contributes to the acid gas adsorption capability of the acid gas adsorption and desorption material according to the present invention, but does not act to improve the acid gas desorption capability. Thus, it is expected that as the rate of tertiary amine in the amine monomer becomes lower, the acid gas adsorption capability of the acid gas adsorption and desorption material according to the present invention becomes higher, and as the rate of primary amine to the total amount of the primary and secondary amines becomes lower, the acid gas desorption capability (acid gas desorption ratio) becomes higher. For example, the rate of secondary amine in the amine monomer may be set to 40% or more. The rate of secondary amine is preferably 50% or more, more preferably 60% or more, most preferably 80% or more.

[Epoxy Monomer]

Although it is conceivable to use various kinds of amine-reactive monomers together with an amine monomer to polymerize the amine-containing resin of the acid gas adsorption and desorption material according to the present invention, it is preferable to use an epoxy monomer (epoxy compound).

Both an aromatic epoxy resin and a non-aromatic epoxy resin can be used as an epoxy compound to be reacted with an amine monomer for polymerizing the amine-containing resin of the acid gas adsorption and desorption material according to the present invention. Examples of the aromatic epoxy resin include polyphenyl-based epoxy resin, fluorene ring-containing epoxy resin, triglycidyl isocyanurate-containing epoxy resin, and heteroaromatic ring (e.g., triazine ring)-containing epoxy resin. Examples of the polyphenyl-based epoxy resin include bisphenol A epoxy resin, brominated bisphenol A epoxy resin, bisphenol F epoxy resin, bisphenol AD epoxy resin, stilbene epoxy resin, biphenyl epoxy resin, bisphenol A novolac epoxy resin, cresol novolac epoxy resin, diaminodiphenylmethane epoxy resin, and tetrakis(hydroxyphenyl)ethane-based epoxy resin. On the other hand, examples of the non-aromatic epoxy resin include aliphatic glycidyl ether epoxy resin, aliphatic glycidyl ester epoxy resin, alicyclic glycidyl ether epoxy resin, alicyclic glycidylamine type epoxy resin, and alicyclic glycidyl ester epoxy resin. These may be used independently, or two or more of them may be used in combination.

Further, specific examples of a monofunctional or polyfunctional aliphatic epoxy resin include n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, t-butylphenyl glycidyl ether, (poly)ethylene glycol diglycidyl ether, (poly)propylene glycol diglycidyl ether, butanediol diglycidyl ether, 1,4-butanediol diglycidyl ether, neopentyl glycidyl ether, 1,6 hexanediol diglycidyl ether, and trimethylolpropane polyglycidyl ether. These may be used independently, or two or more of them may be used in combination.

In a case where the amine-containing resin of the acid gas adsorption and desorption material according to the present invention is obtained by a reaction between the amine compound and the epoxy compound, the ratio (E/A) of the equivalent amount (E) of epoxy group in the epoxy compound to the equivalent amount (A) of active hydrogen in a primary amino group in the amine compound may be set to about 0.5. It is considered that the E/A is preferably 1 or less, more preferably 0.9 or less.

[Porogen]

A porogen (porosifying (pore-forming) agent) may be used when the amine-containing resin of the acid gas adsorption and desorption material according to the present invention polymerize is obtained by the reaction between the amine compound and the epoxy compound.

The porogen may be a solvent capable of dissolving the epoxy compound and the amine compound. The porogen is also used as a solvent capable of causing reaction-induced phase separation after polymerization between the epoxy compound and the amine compound.

Specifically, it is possible to use, as the porogen: cellosolves such as methyl cellosolve, and ethyl cellosolve; esters such as ethylene glycol monomethyl ether acetate, and propylene glycol monomethyl ether acetate; glycols such as polyethylene glycol, and polypropylene glycol; and ethers such as polyoxyethylene monomethyl ether, and polyoxyethylene dimethyl ether.

It is also possible to use, as the porogen: toluene; polar solvents such as ethyl acetate, N,N-dimethylformamide (DMF), acetonitrile, ethanol, and isopropanol; mixed solvents thereof, etc.

These porogens may be used independently, or two or more of them may be used in combination.

After polymerizing the amine-containing resin from the amine compound, the epoxy compound and the porogen, the resin can be porosified by extracting the porogen using a solvent (microphase separation method).

It is possible to use, as the solvent, an aliphatic hydrocarbon solvent, an aromatic hydrocarbon solvent, an aliphatic alcohol solvent, an ether solvent, a halogen-containing organic solvent, etc., in addition to water such as ultrapure water. Examples of the aliphatic hydrocarbon solvent include n-hexane, cyclohexane, methylcyclohexane, n-heptane, n-octane, isooctane, petroleum ether, and benzine. Examples of the aromatic hydrocarbon solvent include toluene, xylene, mesitylene, and benzene. Examples of the aliphatic alcohol solvent include methanol, ethanol, isopropanol, butanol, cyclohexanol, ethylene glycol, propylene glycol, propylene glycol monomethyl ether, and diethylene glycol. Examples of the ether solvent include diethyl ether, diisopropylether, dibutyl ether, ethylene glycol dimethyl ether, ethylene glycol diethyl ether, propylene glycol dimethyl ether, propylene glycol diethyl ether, diethylene glycol dimethyl ether, tetrahydrofuran, dioxane, and anisole. Examples of the halogen-containing organic solvent include dichloromethane, chloroform, carbon tetrachloride, dichloroethane, and chlorobenzene.

These solvents may be used independently, or two or more of them may be used in combination.

A porosified amine-containing resin can be obtained as, e.g., porous bodies each having a three-dimensional bicontinuous structure, porous bodies each having a three-dimensional interconnected pore, or porous bodies each having a three-dimensional continuous pore.

Examples of a method of producing such porous bodies include a template method, a stretching method, an electron beam irradiation etching method, a melt-blow spinning method, an electrospinning method, a Zetta-spinning method, and a self-organizing method, in addition to the microphase separation method.

These porous body production methods may be used independently, or two or more of them may be used in combination. Further, the porous body production method is not limited to the above methods,

The amine-containing resin of the acid gas adsorption and desorption material according to the present invention polymerize may be filled (coat) on the inner surface of pores of each porous body.

For example, the shape of the porous body is a particle shape. A specific form of such a particle-shaped porous body is a spherical form, an ellipsoidal form, a fibrous form or the like. In the porous body, the shape of a pore is not particularly limited. The porous body may have a continuous pore which is formed to be three-dimensionally continuous, or may have independent pores. The porous body may have a through-pore penetrating through the porous body.

The average particle size of the particle-shaped porous bodies is not particularly limited. For example, it is 1 $\mu$m or more, preferably 10 $\mu$m or more, more preferably 20 $\mu$m or more, or may be 30 $\mu$m or more. The average particle size of the porous bodies may be 200 $\mu$m or less, or may be 100 $\mu$m or less, or may be less than 75 $\mu$m.

As used in this specification, the term "average particle size of the porous bodies" means a particle size (d 50) corresponding to an accumulated volume of 50% in a particle size distribution measured by a laser diffraction particle size meter or the like.

As the thickness of the amine-containing resin filled on the inner surface of pore(s) of the porous body as described above becomes smaller, the adsorption rate of acid gas tends to be improved, and as the thickness becomes larger, the adsorption amount tends to become larger

EXAMPLES

Although the present invention will be specifically described below based on examples, it should be understood that the present invention is not limited thereto.

[Production of Acid Gas Adsorption and Desorption Material]

Respective acid gas adsorption and desorption materials of Examples 1 to 11 and Comparative Examples 1 to 7 were produced through the following steps.

(Example 1)

In a 6cc LABORAN Screw Tube Bottle (manufactured by AS ONE Corporation), 1.20 g of 1,4-butanediol diglycidyl ether (BDE) was dissolved in 1.69 g of polypropylene glycol (PPG) (Adeka Polyether P-400 manufactured by ADEKA Corporation) and 1.12 g of ethyl acetate to prepare an epoxy/polypropylene glycol/ethyl acetate solution.
Subsequently, 0.69 g of triethylenetetramine (TETA) and 0.12 g of tris(2-aminoethyl)amine (TA) (TETA / TA = 8/2, in molar ratio) were added into the above bottle to prepare an epoxy/amine/polypropylene glycol/ethyl acetate solution. The ratio (E/A) of the equivalent amount (E) of epoxy group of the epoxy to the equivalent amount (A) of active hydrogen in primary amino group in the amine is 0.5.
Subsequently, the bottle was subjected to shaking by a desktop shaker (Angel Vibrator Digital 60Hz) at a strength of 5 for 2 minutes, and then left still in a constant-temperature oven at 80°C for 4 hours, whereby the solution was cured to obtain an amine-containing resin block. Subsequently, the amine-containing resin block was taken out of the glass container (Screw Tube Bottle), and cut into about 3 mm square. After immersing the resulting amine-containing resin in isopropyl alcohol at 60°C for 1 hour, the immersion liquid was replaced to new one, and the amine-containing resin was re-immersed therein at 60°C for 1 hour. Then, after immersing the resulting amine-containing resin in ultrapure water at 60°C for 1 hour, the immersion liquid was replaced to new one, and the amine-containing resin was re-immersed therein at 60°C for 1 hour to remove polypropylene glycol and ethyl acetate therefrom. Then, the resulting amine-containing resin was immersed in methanol at room temperature for 1 hour, and air-dried at room temperature for 12 hours. Subsequently, the resulting amine-containing resin was vacuum-dried at 60°C for 8 hours to obtain an amine-containing resin of Example 1.

(Example 2)

In a 6cc LABORAN Screw Tube Bottle (manufactured by AS ONE Corporation), 1.24 g of 1,4-butanediol diglycidyl ether was dissolved in 1.69 g of polypropylene glycol (Adeka Polyether P-400 manufactured by ADEKA Corporation) and 1.13 g of ethyl acetate to prepare an epoxy/polypropylene glycol/ethyl acetate solution.
Subsequently, 0.54 g of triethylenetetramine and 0.24 g of tris(2-aminoethyl)amine (TETA/ TA = 6/4, in molar ratio) were added into the above bottle to prepare an epoxy/amine/polypropylene glycol/ethyl acetate solution.
Except for the above, the same process as that in Example 1 was performed to obtain an amine-containing resin of Example 2.

(Example 3)

In a 6cc LABORAN Screw Tube Bottle (manufactured by AS ONE Corporation), 1.27 g of 1,4-butanediol diglycidyl ether was dissolved in 1.69 g of polypropylene glycol (Adeka Polyether P-400 manufactured by ADEKA Corporation) and 1.12 g of ethyl acetate to prepare an epoxy/polypropylene glycol/ethyl acetate solution.
Subsequently, 0.46 g of triethylenetetramine and 0.31 g of tris(2-aminoethyl)amine (TETA / TA = 5/5, in molar ratio) were added into the above bottle to prepare an epoxy/amine/polypropylene glycol/ethyl acetate solution.
Except for the above, the same process as that in Example 1 was performed to obtain an amine-containing resin of Example 3.

(Example 4)

In a 6cc LABORAN Screw Tube Bottle (manufactured by AS ONE Corporation), 1.34 g of 1,4-butanediol diglycidyl ether was dissolved in 1.41 g of polypropylene glycol (Adeka Polyether P-400 manufactured by ADEKA Corporation) and 1.41 g of ethyl acetate to prepare an epoxy/polypropylene glycol/ethyl acetate solution.
Subsequently, 0.19 g of triethylenetetramine and 0.52 g of tris(2-aminoethyl)amine (TETA/ TA = 2/8, in molar ratio) was added into the above bottle to prepare an epoxy/amine/polypropylene glycol/ethyl acetate solution.

Except for the above, the same process as that in Example 1 was performed to obtain an amine-containing resin of Example 4.

(Example 5)

In a 6cc LABORAN Screw Tube Bottle (manufactured by AS ONE Corporation), 0.76 g of 1,4-butanediol diglycidyl ether and 0.19 g of TETRAD-C (TC) (Glycidylamine epoxy resin manufactured by Mitsubishi Gas Chemical Company, Inc.) (BDE / TC = 8/2, in molar ratio) were dissolved in 1.15 g of polypropylene glycol (Adeka Polyether P-400 manufactured by ADEKA Corporation) and 1.59 g of butyl acetate to prepare an epoxy/polypropylene glycol/butyl acetate solution.

Subsequently, 1.09 g of pentaethylene hexamine (PEHA) was added into the above bottle to prepare an epoxy/amine/polypropylene glycol/butyl acetate solution.

Except for the above, the same process as that in Example 1 was performed to obtain an amine-containing resin of Example 5.

(Example 6)

In a 6cc LABORAN Screw Tube Bottle (manufactured by AS ONE Corporation), 0.94 g of 1,4-butanediol diglycidyl ether and 0.24 g of TETRAD-C (Glycidylamine epoxy resin manufactured by Mitsubishi Gas Chemical Company, Inc.) were dissolved in 1.70 g of polypropylene glycol (Adeka Polyether P-400 manufactured by ADEKA Corporation) and 1.13 g of ethyl acetate to prepare an epoxy/polypropylene glycol/ethyl acetate solution.

Subsequently, 0.85 g of triethylenetetramine was added into the above bottle to prepare an epoxy/amine/polypropylene glycol/ethyl acetate solution.

Except for the above, the same process as that in Example 1 was performed to obtain an amine-containing resin of Example 6.

(Example 7)

In a 6cc LABORAN Screw Tube Bottle (manufactured by AS ONE Corporation), 1.28 g of 1,4-butanediol diglycidyl ether was dissolved in 1.50 g of polypropylene glycol (Adeka Polyether P-400 manufactured by ADEKA Corporation) and 1.33 g of ethyl acetate to prepare an epoxy/polypropylene glycol/ethyl acetate solution.

Subsequently, 0.77 g of triethylenetetramine was added into the above bottle to prepare an epoxy/amine/polypropylene glycol/ethyl acetate solution. E/A is 0.6.

Except for the above, the same process as that in Example 1 was performed to obtain an amine-containing resin of Example 7.

(Example 8)

In a 6cc LABORAN Screw Tube Bottle (manufactured by AS ONE Corporation), 1.34 g of 1,4-butanediol diglycidyl ether was dissolved in 1.10 g of polypropylene glycol (Adeka Polyether P-400 manufactured by ADEKA Corporation) and 1.66 g of ethyl acetate to prepare an epoxy/polypropylene glycol/ethyl acetate solution.

Subsequently, 0.69 g of triethylenetetramine was added into the above bottle to prepare an epoxy/amine/polypropylene glycol/ethyl acetate solution. E/A is 0.7.

Except for the above, the same process as that in Example 1 was performed to obtain an amine-containing resin of Example 8.

(Example 9)

In a 6cc LABORAN Screw Tube Bottle (manufactured by AS ONE Corporation), 1.40 g of 1,4-butanediol diglycidyl ether was dissolved in 1.16 g of polypropylene glycol (Adeka Polyether P-400 manufactured by ADEKA Corporation) and 1.60 g of ethyl acetate to prepare an epoxy/polypropylene glycol/ethyl acetate solution.

Subsequently, 0.63 g of triethylenetetramine was added into the above bottle to prepare an epoxy/amine/polypropylene glycol/ethyl acetate solution. E/A is 0.8.

Except for the above, the same process as that in Example 1 was performed to obtain an amine-containing resin of Example 9.

(Example 10)

In a 6cc LABORAN Screw Tube Bottle (manufactured by AS ONE Corporation), 1.45 g of 1,4-butanediol diglycidyl ether was dissolved in 0.87 g of polypropylene glycol (Adeka Polyether P-400 manufactured by ADEKA Corporation) and 1.85 g of ethyl acetate to prepare an epoxy/polypropylene glycol/ethyl acetate solution.
Subsequently, 0.58 g of triethylenetetramine was added into the above bottle to prepare an epoxy/amine/polypropylene glycol/ethyl acetate solution. E/A is 0.9.
Except for the above, the same process as that in Example 1 was performed to obtain an amine-containing resin of Example 9.

(Example 11)

In a 6cc LABORAN Screw Tube Bottle (manufactured by AS ONE Corporation), 1.50 g of 1,4-butanediol diglycidyl ether was dissolved in 0.54 g of polypropylene glycol (Adeka Polyether P-400 manufactured by ADEKA Corporation) and 2.15 g of ethyl acetate to prepare an epoxy/polypropylene glycol/ethyl acetate solution.
Subsequently, 0.54 g of triethylenetetramine was added into the above bottle to prepare an epoxy/amine/polypropylene glycol/ethyl acetate solution. E/A is 1.
Except for the above, the same process as that in Example 1 was performed to obtain an amine-containing resin of Example 11.

(Example 12)

In a 6cc LABORAN Screw Tube Bottle (manufactured by AS ONE Corporation), 0.8 g of ODE (1,7-octadiene diepoxide manufactured by Tokyo Chemical Industry Co., Ltd.) and 0.2 g of TETRAD-C (Glycidylamine epoxy resin manufactured by Mitsubishi Gas Chemical Company, Inc.) (ODE / TC = 8/2, in molar ratio) were dissolved in 2.02 g of polypropylene glycol (Adeka Polyether P-400 manufactured by ADEKA Corporation) and 0.87 g of ethyl acetate to prepare an epoxy/polypropylene glycol/ethyl acetate solution.
Subsequently, 0.97 g of triethylenetetramine was added into the above bottle to prepare an epoxy/amine/polypropylene glycol/ethyl acetate solution.
Except for the above, the same process as that in Example 1 was performed to obtain an amine-containing resin of Example 12.

(Example 13)

3.0 g of silica gel (CARiACT Q30 (75-150 nm) manufactured by Fuji Silysia Chemical Ltd.) and 30 g of methanol were put in a 200 cc recovery flask, and subjected to ultrasonic treatment for 3 minutes. Then, 0.93 g of weighed ODE (1,7-octadiene diepoxide manufactured by Tokyo Chemical Industry Co., Ltd.) and 0.96 g of TETA (triethylenetetramine manufactured by Sigma-Aldrich) were added while being dissolved in 30 g of methanol, and after adding a stirrer tip, the resulting mixture was stirred at 400 rpm for 3 minutes. Then, the recovery flask was put in a water bath at 60°C, and depressurized by a rotatory evaporator for about 10 minutes, to remove methanol. Subsequently, the resulting solution was vacuum-dried at 80°C for 4 hours to obtain an amine-containing resin of Example 13 in the form of amine-containing resin-filled silica particles.

(Example 14)

3.0 g of silica gel (CARiACT Q30 (75-150 nm) manufactured by Fuji Silysia Chemical Ltd.) and 30 g of methanol were put in a 200 cc recovery flask, and subjected to ultrasonic treatment for 3 minutes. Then, 0.78 g of weighed ODE (1,7-octadiene diepoxide manufactured by Tokyo Chemical Industry Co., Ltd.), 0.19 g of TETRAD-C (manufactured by Mitsubishi Gas Chemical Company, Inc.), and 0.94 g of TETA (triethylenetetramine manufactured by Sigma-Aldrich) were added while being dissolved in 30 g of methanol, and after adding a stirrer tip, the resulting mixture was stirred at 400 rpm for 3 minutes.
Except for the above, the same process as that in Example 13 was performed to obtain an amine-containing resin of Example 14 in the form of amine-containing resin-filled silica particles.

(Example 15)

3.0 g of silica gel (CARiACT Q30 (75-150 nm) manufactured by Fuji Silysia Chemical Ltd.) and 30 g of methanol were put in a 200 cc recovery flask, and subjected to ultrasonic treatment for 3 minutes. Then, 0.61 g of weighed ODE (1,7-octadiene diepoxide manufactured by Tokyo Chemical Industry Co., Ltd.), 0.15 g of TETRAD-C (manufactured by Mitsubishi Gas Chemical Company, Inc.), and 0.73 g of TETA (triethylenetetramine manufactured by Sigma-Aldrich) were added while being dissolved in 30 g of methanol, and after adding a stirrer tip, the resulting mixture was stirred at 400 rpm for 3 minutes.

Except for the above, the same process as that in Example 13 was performed to obtain an amine-containing resin of Example 15 in the form of amine-containing resin-filled silica particles.

(Example 16)

3.0 g of silica gel (CARiACT Q30 (75-150 nm) manufactured by Fuji Silysia Chemical Ltd.) and 30 g of methanol were put in a 200 cc recovery flask, and subjected to ultrasonic treatment for 3 minutes. Then, 0.54 g of weighed ODE (1,7-octadiene diepoxide manufactured by Tokyo Chemical Industry Co., Ltd.), 0.13 g of TETRAD-C (manufactured by Mitsubishi Gas Chemical Company, Inc.), and 0.81 g of TETA (triethylenetetramine manufactured by Sigma-Aldrich) were added while being dissolved in 30 g of methanol, and after adding a stirrer tip, the resulting mixture was stirred at 400 rpm for 3 minutes.
Except for the above, the same process as that in Example 13 was performed to obtain an amine-containing resin of Example 16 in the form of amine-containing resin-filled silica particles.

(Comparative Example 1)

In a 6cc LABORAN Screw Tube Bottle (manufactured by AS ONE Corporation), 1.58 g of JER828 (bisphenol A epoxy resin manufactured by Mitsubishi Chemical Corporation) was dissolved in 2.63 g of polypropylene glycol (Adeka Polyether P-400 manufactured by ADEKA Corporation) and 0.36 g of polyethylene glycol (manufactured by Sigma-Aldrich, average molecular weight: 200) to prepare an epoxy/polypropylene glycol/polyethylene glycol solution.
Subsequently, 0.60 g of triethylenetetramine was added into the above bottle to prepare an epoxy/amine/polypropylene glycol/polyethylene glycol solution. E/A is 0.5.
Subsequently, the bottle was subjected to shaking by a desktop shaker (Angel Vibrator Digital 60Hz) at a strength of 5 for 2 minutes, and then left still in a constant-temperature oven at 80°C for 4 hours, whereby the solution was cured. Subsequently, an amine-containing resin block was taken out of the glass container, and cut into about 3 mm square. After immersing the resulting amine-containing resin in isopropyl alcohol at 60°C for 1 hour, the immersion liquid was replaced to new one, and the amine-containing resin was re-immersed therein at 60°C for 1 hour. Then, after immersing the resulting amine-containing resin in ultrapure water at 60°C for 1 hour, the immersion liquid was replaced to new one, and the amine-containing resin was re-immersed therein at 60°C for 1 hour to remove polypropylene glycol and ethyl acetate therefrom. Then, the resulting amine-containing resin was immersed in methanol at room temperature for 1 hour, and air-dried at room temperature for 12 hours. Subsequently, the resulting amine-containing resin was vacuum-dried at 60°C for 8 hours to obtain an amine-containing resin of Comparative Example 1.

(Comparative Example 2)

In a 6cc LABORAN Screw Tube Bottle (manufactured by AS ONE Corporation), 1.80 g of JER828 (bisphenol A epoxy resin manufactured by Mitsubishi Chemical Corporation) was dissolved in 2.65 g of polypropylene glycol (Adeka Polyether P-400 manufactured by ADEKA Corporation) and 0.36 g of polyethylene glycol (manufactured by Sigma-Aldrich, average molecular weight: 200) to prepare an epoxy/polypropylene glycol/polyethylene glycol solution.
Subsequently, 0.43 g of triethylenetetramine was added into the above bottle to prepare an epoxy/amine/polypropylene glycol/polyethylene glycol solution. E/A is 0.8.
Except for the above, the same process as that in Comparative Example 1 was performed to obtain an amine-containing resin of Comparative Example 2.

(Comparative Example 3)

In a 6cc LABORAN Screw Tube Bottle (manufactured by AS ONE Corporation), 1.86 g of JER828 (bisphenol A epoxy resin manufactured by Mitsubishi Chemical Corporation) was dissolved in 2.62 g of polypropylene glycol (Adeka Polyether P-400 manufactured by ADEKA Corporation) and 0.36 g of polyethylene glycol (manufactured by Sigma-Aldrich, average molecular weight: 200) to prepare an epoxy/polypropylene glycol/polyethylene glycol solution.
Subsequently, 0.35 g of triethylenetetramine was added into the above bottle to prepare an epoxy/amine/polypropylene glycol/polyethylene glycol solution. E/A is 1.
Except for the above, the same process as that in Comparative Example 1 was performed to obtain an amine-containing resin of Comparative Example 3.

(Comparative Example 4)

In a 6cc LABORAN Screw Tube Bottle (manufactured by AS ONE Corporation), 1.20 g of 1,4-butanediol diglycidyl ether was dissolved in 1.39 g of polypropylene glycol (Adeka Polyether P-400 manufactured by ADEKA Corporation) and 1.39 g of ethyl acetate to prepare an epoxy/polypropylene glycol/ethyl acetate solution.

Subsequently, 0.69 g of triethylenetetramine and 0.12 g of tris(2-aminoethyl)amine (TETA/ TA = 8/2, in molar ratio) were added into the above bottle to prepare an epoxy/amine/polypropylene glycol/ethyl acetate solution.

Except for the above, the same process as that in Comparative Example 1 was performed to obtain an amine-containing resin of Comparative Example 4.

(Comparative Example 5)

In a 6cc LABORAN Screw Tube Bottle (manufactured by AS ONE Corporation), 0.59 g of 1,4-butanediol diglycidyl ether and 0.59 g of TETRAD-C (Glycidylamine epoxy resin manufactured by Mitsubishi Gas Chemical Company, Inc.) (BDE / TC = 5/5, in molar ratio) were dissolved in 1.27 g of polypropylene glycol (Adeka Polyether P-400 manufactured by ADEKA Corporation) and 1.50 g of ethyl acetate to prepare an epoxy/polypropylene glycol/ethyl acetate solution.

Subsequently, 0.85 g of triethylenetetramine was added into the above bottle to prepare an epoxy/amine/polypropylene glycol/ethyl acetate solution.

Except for the above, the same process as that in Comparative Example 1 was performed to obtain an amine-containing resin of Comparative Example 5.

(Comparative Example 6)

In a 6cc LABORAN Screw Tube Bottle (manufactured by AS ONE Corporation), 0.24 g of 1,4-butanediol diglycidyl ether and 0.94 g of TETRAD-C (Glycidylamine epoxy resin manufactured by Mitsubishi Gas Chemical Company, Inc.) (BDE / TC = 2/8, in molar ratio) were dissolved in 0.81 g of polypropylene glycol (Adeka Polyether P-400 manufactured by ADEKA Corporation) and 1.90 g of ethyl acetate to prepare an epoxy/polypropylene glycol/ethyl acetate solution.

Subsequently, 0.85 g of triethylenetetramine was added into the above bottle to prepare an epoxy/amine/polypropylene glycol/ethyl acetate solution.

Except for the above, the same process as that in Comparative Example 1 was performed to obtain an amine-containing resin of Comparative Example 6.

(Comparative Example 7)

3.0 g of silica gel (CARiACT Q30 (75-150 nm) manufactured by Fuji Silysia Chemical Ltd.) and 45 g of methanol were put in a 200 cc recovery flask, and subjected to ultrasonic treatment for 3 minutes. Then, 2.0 g of polyethylenimine (SP-012 manufactured by Nippon Shokubai Co., Ltd.) were added, and after adding a stirrer tip, the resulting mixture was stirred at 400 rpm for 3 minutes. Then, the recovery flask was put in a water bath at 60°C, and depressurized by a rotatory evaporator for about 10 minutes, to remove methanol. Subsequently, through vacuum-drying at 80°C for 4 hours, amine-filled silica particles of Comparative Example 7 were obtained.

[Evaluation of Acid Gas Adsorption and Desorption Material]

The acid gas adsorption and desorption materials of Examples 1-11 and Comparative Examples 1-7 were evaluated in the following manner.

(Evaluation of Amine Density)

The weight percentages of CHN elements were measured using a CHN elemental analyzer (VarioELIII manufactured by Elementar). Using the obtained weight% of N element and the atomic weight of N, the amine density [mmol/g ] was calculated by the following formula (1).

$$\text{Amine density [mmol/g]} = \text{weight\% of N element} / \text{atomic weight of N} / 100 \times 1000 \text{ --- (1)}$$

(Evaluation of BET Specific Surface Area)

The BET specific surface area was measured by a nitrogen adsorption BET method complying with JIS Z 8830, using a specific surface area measuring device (trade name: "BERSORP-mini" manufactured by MicrotracBEL Corporation).

(Evaluation of Glass-Transition Temperature (Tg))

The glass-transition temperature (Tg) was obtained by perform a DSC measurement under the following conditions.

Using a differential scanning calorimeter (DSC 2500 manufactured by TA Instruments), a sample of about 5 mg was heated in nitrogen atmosphere from 30°C up to 200°C at a temperature rising rate of 10°C/min, and held at that temperature for 1 minute. Then, the sample was cooled down to - 50°C at a temperature lowering rate of 10°C/min, and held at that temperature for 1 minute, whereafter the sample was heated to 200°C at a temperature rising rate of 10°C/min. When two base lines before and after start of a change in specific heat during the second temperature rising are denoted, respectively, by A and B, and a tangent line at a point which lies in an area of a DSC curve bent due to the change in specific heat and at which the slope of the DSC curve is maximized is denoted by C, an intermediate temperature between an intersection of A and C and an intersection of B and C was defined as a glass-transition temperature (Tg [°C]).

(In-Resin $CO_2$ Diffusion Rate)

Firstly, the amine utilization ratio was calculated by the following formula (2), using the amine density and the $CO_2$ adsorption amount (at 23°C for 1 hour).

Then, the in-resin $CO_2$ diffusion rate was calculated by the following formulas (3), using the amine utilization ratio and the specific surface area.

$$\text{Amine utilization ratio} = CO_2 \text{ adsorption amount (at } 23°C \text{ for 1 hour)} / \text{amine density} \times 100$$

$$\text{--- (2)}$$

$$\text{In-resin } CO_2 \text{ diffusion rate} = \text{amine utilization ratio} / \text{specific surface area} \quad \text{--- (3)}$$

($CO_2$ Adsorption-Desorption Test)

< Sample Filling >

Each sample was vacuum-dried at 60°C for 2 hours, and then stored within a dry room with a dew point of about - 60°C. Within the dry room, the sample was weighed and filled by 50 mg in a sample tube (PFA) having an inner diameter 4mm $\phi$ and an outer diameter of 6 mm $\phi$, and fixed by cotton inserted into both ends of the tube.

< Pretreatment >

Subsequently, the sample tube was connected to a $CO_2$ circulation testing device, and immersed in a water bath at 23°C. A dry gas consisting of $N_2$ gas at a flow rate of 156 ml/min and a dry gas consisting of 5% $CO_2/N_2$ gas at a flow rate of 2.53 ml/min were mixed with a wet gas obtained by bubbling $N_2$ gas in pure water at a flow rate of 142 ml/min, and the resulting preparation gas having an acid-gas concentration of about 400 ppm, a temperature of 23°C and a humidity of 50%RH was supplied to the sample tube at a flow rate of 300 ml/min. The inner pressure of the sample tube varies depending on the shape of the sample tube, etc. Thus, in order to uniform the testing conditions, the inner pressure was set to a constant value of 107 kPa by a back pressure valve installed at the downstream side of the device. Then, in order to remove $CO_2$ which has already be adsorbed, and water, from the sample, the sample tube was immersed in a hot bath at 80°C for 2 hours or more to perform pre-desorption until the sample reaches a stable state at 80°C. Here, the term "stable state" means a state in which $CO_2$ concentrations measured at the inlet and outlet of the sample tube by an inlet-outlet concentration meter ($CO_2/H_2O$ gas analyzer, LI-850-3 manufactured by LI-COR) are stable at equivalent values.

< Adsorption Test >

Then, the sample tube was immersed in a water bath at 23°C to start to adsorb $CO_2$, and the adsorption state was held for 15 hours, under the gas supply condition and pressure described in the Section < Pretreatment >. The amount of $CO_2$ adsorbed by the sample was calculated from a difference of the $CO_2$ concentrations measured by the inlet-outlet concentration meter, and used as a $CO_2$ adsorption amount (at 23°C for 15 hours) [mmol/g]).

< Desorption Test >

Then, the sample tube was immersed in a hot bath at 50°C for 1.5 hour, under the gas supply condition and pressure described in the Section < Pretreatment >, and the amount of $CO_2$ (at 50°C for 1.5 hours) [mmol/g]) desorbed from the sample was calculated from a difference of the $CO_2$ concentrations measured by the inlet-outlet concentration meter.

Further, from the $CO_2$ desorption amount at 50°C with respect to the $CO_2$ adsorption amount (at 23°C for 15 hours), a $CO_2$ desorption ratio (at 50°C for 1.5 hours) [%]) was calculated by the following formula (4).

$$CO_2 \text{ desorption ratio (at 50°C for 1.5 hours)} =$$

$$CO_2 \text{ desorption amount (at 50°C for 1.5 hours)} / CO_2 \text{ adsorption amount (at 23°C for 15 hours)}$$

(Evaluation of Weight Retention Ratio)

As an index indicative of heat resistance of the acid gas adsorption and desorption material, the weight retention ratio was evaluated in the following manner. It is considered that a higher value of the weight retention ratio means a better heat resistance.

Within a dry room with a dew point of about - 60°C, about 30 g of the sample cut into 3 mm square or less was put in a 6 cc glass container whose weight (W1) has been measured. After vacuum-drying at 60°C for 2 hours, the weight (W2) of the 6 cc glass container with the sample was measured, and an initial sample dry weight (W3) was calculated by the following formula (5).

Then, the 6 cc glass container with the sample was left still at 85°C and 10%RH for 500 hours in a thermo-hygrostat (PSL-2J manufactured by ESPEC Corporation). Subsequently, after vacuum-drying at 60°C for 2 hours within the dry room, the weight (W4) of the 6 cc glass container with the sample was measured, and a sample dry weight (W5) after the treatment at 85°C and 10%RH for 500 hours was calculated by the following formula (6).

Then, a sample weight retention ratio after the treatment at 85°C and 10%RH for 500 hours was calculated by the following formula (7).

$$\text{Initial sample dry weight } W3 = W2 - W1 \qquad\qquad \text{--- (5)}$$

$$\text{Sample dry weight after treatment at 85°C and 10\%RH for 500 hours } W5 = W4 - W1$$

$$\text{--- (6)}$$

$$\text{Sample weight retention ratio after treatment at 85°C and 10\%RH for 500 hours}$$

$$= W5 / W3 \times 100 \qquad\qquad \text{--- (7)}$$

In Comparative Example 7, the sample is an adsorption material prepared by filling an amine solution in a porous carrier. Thus, simultaneous thermal analysis was performed by the following method, using a DSC/TAG apparatus (SDT 6500 manufactured by TA instruments), and the weight (W6) of only the amine solution was calculated to obtain the weight retention ratio.

The initial weight (W6) of the amine solution was calculated, using a weight retention ratio (W7) after completion of the following "3. Isothermal" step, and a weight retention ratio (W8) after completion of the following "5. Isothermal" step.

Similarly, the weight (W9) of the amine solution after the treatment at 85°C and 10%RH for 500 hours was calculated, using a weight retention ratio (W10) after completion of the following "3. Isothermal" step, and a weight retention ratio (W11) after completion of the following "5. Isothermal" step.

A weight retention ratio (W12) of the amine solution after the treatment at 85°C and 10%RH for 500 hours was calculated from W6 and W9.

[Measurement Conditions]

1. Equilibrate: 30°C
2. Ramp: 10°C/min, to 100°C
3. Isothermal: 40 min
4. Ramp: 10°C/min, to 800°C
5. Isothermal: 5 min

$$\text{Initial amine solution weight } W6 = 100 - (100 / W7 \times W8) \qquad \text{--- (8)}$$

$$\text{Amine solution weight after treatment at 85°C and 10\%RH for 500 hours } W9$$
$$= 100 - (100 / W10 \times W11) \qquad \text{--- (9)}$$

$$\text{Amine solution weight retention ratio after treatment at 85°C and 10\%RH for 500 hours } W12$$
$$= W9 / W6 \times 100 \qquad \text{--- (10)}$$

The results of the evaluations are shown in Table 1.

TABLE 1

| Sample | Monomer (Abbreviated Name) | | E/A | Amine Density | Specific Surface Area | Tg | In-resin CO$_2$ Diffusion Rate | CO$_2$ Adsorption Amount | CO$_2$ Desorption Amount | CO$_2$ Desorption Ratio | Weight Retension Ratio |
|---|---|---|---|---|---|---|---|---|---|---|---|
| | Epoxy Monomer | Amine Monomer | | | | | | 23°C 15hr | 50°C 1.5hr | 50°C 1.5hr | 85°C10%RH 500hr |
| | [-] | [-] | [-] | [mmol/g] | [m2/g] | [°C] | [-] | [mmol/g] | [mmol/g] | [%] | [%] |
| Example 1 | BDE | TETA/TA (8/2) | 0.5 | 9.3 | 1.1 | -2 | 2.07 | 1.26 | 0.91 | 72 | 94.8 |
| Example 2 | BDE | TETA/TA (6/4) | 0.5 | 9.3 | 2.1 | 1 | 1.6 | 1.15 | 0.92 | 80 | 95.7 |
| Example 3 | BDE | TETA/TA (5/5) | 0.5 | 9.3 | 1.6 | 3 | 1.69 | 1.13 | 0.88 | 78 | 95.8 |
| Example 4 | BDE | TETA/TA (2/8) | 0.5 | 8.6 | 2.5 | 7 | 1.55 | 1.06 | 0.86 | 81 | 96.0 |
| Example 5 | BDE/TC (8/2) | PEHA | 0.5 | 11.4 | 1.8 | 2 | 1.6 | 1.58 | 1.39 | 88 | 97.4 |
| Example 6 | BDE/TC (8/2) | TETA | 0.5 | 10.0 | 2.0 | 6 | 1.45 | 1.62 | 1.28 | 79 | 95.8 |
| Example 7 | BDE | TETA | 0.6 | 9.3 | 2.3 | 1 | 1.52 | 1.12 | 0.93 | 83 | 97.0 |
| Example 8 | BDE | TETA | 0.7 | 8.6 | 2.6 | 6 | 1.65 | 1.06 | 0.94 | 89 | 97.4 |
| Example 9 | BDE | TETA | 0.8 | 7.9 | 3.0 | 7 | 1.60 | 0.92 | 0.84 | 92 | 97.7 |
| Example 10 | BDE | TETA | 0.9 | 7.1 | 3.7 | 13 | 1.12 | 0.60 | 0.56 | 93 | 98.3 |
| Example 11 | BDE | TETA | 1 | 6.9 | 4.4 | 16 | 0.84 | 0.39 | 0.36 | 94 | 98.0 |
| Example 12 | ODE/TC (8/2) | TETA | 0.5 | 12.0 | 4.9 | 21 | 0.61 | 1.78 | 1.24 | 75 | 95.7 |
| Example 13 | ODE | TETA | 0.5 | 4.4 | 30.4 | -2 | 0.01 | 0.96 | 0.65 | 67 | 99.1 |
| Example 14 | ODE/TC (8/2) | TETA | 0.5 | 4.3 | 32.9 | 23 | 0.01 | 0.87 | 0.64 | 74 | 99.2 |
| Example 15 | ODE/TC (8/2) | TETA | 0.5 | 3.9 | 103.9 | 24 | 0.00 | 0.66 | 0.54 | 81 | 99.4 |

(continued)

| Sample | Monomer (Abbreviated Name) | | E/A | Amine Density | Specific Surface Area | Tg | In-resin $CO_2$ Diffusion Rate | $CO_2$ Adsorption Amount | $CO_2$ Desorption Amount | $CO_2$ Desorption Ratio | Weight Retension Ratio |
|---|---|---|---|---|---|---|---|---|---|---|---|
| | Epoxy Monomer | Amine Monomer | | | | | | 23°C 15hr | 50°C 1.5hr | 50°C 1.5hr | 85°C10%RH 500hr |
| | [-] | [-] | [-] | [mmol/g] | [m2/g] | [°C] | [-] | [mmol/g] | [mmol/g] | [%] | [%] |
| Example 16 | ODE/TC (8/2) | TETA | 0.4 | 4.2 | 111.3 | 16 | 0.00 | 0.87 | 0.66 | 76 | 98.5 |
| Comparative Example 1 | JER828 | TETA | 0.5 | 6.6 | 0.3 | 62 | 0.4 | 0.03 | 0.01 | 41 | 99.0 |
| Comparative Example 2 | JER828 | TETA | 0.8 | 5.1 | 5.5 | 95 | 0.22 | 0.14 | 0.12 | 86 | 98.7 |
| Comparative Example 3 | JER828 | TETA | 1.0 | 4.4 | 11.6 | 112 | 0.05 | 0.06 | 0.04 | 80 | 98.7 |
| Comparative Example 4 | BDE | TETA/TA (8/2) | 0.5 | 10.0 | 0.3 | -1 | 1.43 | 0.46 | 0.21 | 46 | 97.3 |
| Comparative Example 5 | BDE/TC (5/5) | TETA | 0.5 | 11.4 | 0.8 | 20 | 1.0 | 0.76 | 0.29 | 38 | 97.5 |
| Comparative Example 6 | BDE/TC (2/8) | TETA | 0.5 | 12.1 | 1.2 | 46 | 0.40 | 0.45 | 0.12 | 27 | 97.4 |
| Comparative Example 7 | Fillers | | - | 7.9 | 35.5 | - | - | 2.00 | 0.82 | 41 | 85.3 |

EP 4 159 308 A1

18

From the results in Table 1, it can be confirmed that according to the present invention, it is possible to obtain a acid gas adsorption and desorption material which is capable of satisfying both excellent durability and high adsorption and desorption amounts, and is also good in terms of desorption energy.

**Claims**

1. An acid gas adsorption and desorption material having acid gas adsorption and desorption capabilities, wherein the acid gas adsorption and desorption material is capable of adsorbing 0.35 mmol/g or more of acid gas within 15 hours under one or more acid gas adsorption conditions, in an atmosphere whose acid gas concentration is 400 ppm ± 10 ppm, and then desorbing 50% or more of the adsorbed acid gas within 1.5 hours under one or more acid gas desorption conditions.

2. The acid gas adsorption and desorption material as claimed in claim 1, wherein the one or more acid gas adsorption conditions include a temperature condition of 23°C, and the one or more acid gas desorption conditions include a temperature condition of 50°C.

3. The acid gas adsorption and desorption material as claimed in claim 1 or 2, wherein each of the one or more acid gas adsorption conditions and the one or more acid gas desorption conditions include a pressure condition of an atmospheric pressure or more.

4. The acid gas adsorption and desorption material as claimed in any one of claims 1 to 3, wherein the one or more acid gas adsorption conditions include a humidity condition of 50%RH.

5. The acid gas adsorption and desorption material as claimed in any one of claims 1 to 4, wherein the one or more acid gas adsorption conditions include an acid gas supply flow rate of 300 ml/min.

6. The acid gas adsorption and desorption material as claimed in any one of claims 1 to 5, wherein the acid gas adsorption and desorption material has a weight retention ratio of 90% or more, as measured after being left for 500 hours under temperature and humidity conditions of 85°C and 10%RH.

7. The acid gas adsorption and desorption material as claimed in any one of claims 1 to 6, wherein the acid gas adsorption and desorption material is capable of desorbing 0.35 mmol/g or more of acid gas within 1.5 hours under the one or more acid gas desorption conditions.

8. The acid gas adsorption and desorption material as claimed in any one of claims 1 to 7, wherein the acid gas adsorption and desorption material consists primarily of an amine-containing resin.

9. An acid gas adsorption and desorption material which consists primarily of an amine-containing resin having a glass transition temperature of 40°C or less, and has a specific surface area of 1 m$^2$/g or more.

10. The acid gas adsorption and desorption material as claimed in claim 9, wherein the amine-containing resin comprises an amine monomer component and an epoxy monomer component.

11. The acid gas adsorption and desorption material as claimed in claim 9 or 10, wherein the amine-containing resin has an amine density of 8 mmol/g or more.

12. The acid gas adsorption and desorption material as claimed in any one of claims 9 to 11, wherein the amine-containing resin has an in-resin acid gas diffusion rate of 1.2 or more.

## INTERNATIONAL SEARCH REPORT

| International application No. |
|---|
| PCT/JP2021/020776 |

**A. CLASSIFICATION OF SUBJECT MATTER**
B01J 20/28(2006.01)i; B01D 53/04(2006.01)i; B01J 20/26(2006.01)i; B01J 20/34(2006.01)i; C01B 32/50(2017.01)i
FI: B01J20/28 Z; B01J20/34; B01J20/26 C; B01D53/04 220; C01B32/50
According to International Patent Classification (IPC) or to both national classification and IPC

**B. FIELDS SEARCHED**

Minimum documentation searched (classification system followed by classification symbols)
B01J20/28; B01D53/04; B01J20/26; B01J20/34; C01B32/50

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2012-055886 A (UNIVERSITY OF SOUTHERN CALIFORNIA) 22 March 2012 (2012-03-22) paragraphs [0040]-[0041], [0049], [0052]-[0053], table 2 | 1-8<br>9-12 |
| A | JP 2018-509280 A (UNIVERSITY OF SOUTHERN CALIFORNIA) 05 April 2018 (2018-04-05) paragraphs [0084]-[0088] | 1-12 |
| A | JP 2017-047412 A (HITACHI CHEMICAL CO., LTD.) 09 March 2017 (2017-03-09) entire text, all drawings | 1-12 |
| A | US 8557027 B2 (EXXONMOBIL RESEARCH AND ENGINEERING COMPANY) 15 October 2013 (2013-10-15) entire text, all drawings | 1-12 |

☐ Further documents are listed in the continuation of Box C.　　☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19 July 2021 (19.07.2021) | 10 August 2021 (10.08.2021) |

| Name and mailing address of the ISA/<br>　Japan Patent Office<br>　3-4-3, Kasumigaseki, Chiyoda-ku,<br>　Tokyo 100-8915, Japan | Authorized officer<br><br><br>Telephone No. |
|---|---|

Form PCT/ISA/210 (second sheet) (January 2015)

INTERNATIONAL SEARCH REPORT

Information on patent family members

International application No.

PCT/JP2021/020776

| Patent Documents referred in the Report | Publication Date | Patent Family | Publication Date |
|---|---|---|---|
| JP 2012-055886 A | 22 Mar. 2012 | US 2008/0293976 A1 paragraphs [0040]-[0041], [0049], [0052]-[0053], table 2 <br> WO 2008/021700 A1 <br> EP 2054151 A1 <br> CA 2659490 A <br> CN 101500704 A <br> KR 10-2009-0069271 A | |
| JP 2018-509280 A | 05 Apr. 2018 | US 2016/0199810 A1 paragraphs [0093]-[0097] <br> WO 2016/114991 A1 <br> EP 3244993 A1 <br> CA 2973572 A1 <br> KR 10-2017-0127416 A | |
| JP 2017-047412 A | 09 Mar. 2017 | (Family: none) | |
| US 8557027 B2 | 15 Oct. 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017009241 A
- US 7767004 B
- JP 2018509280 A
- JP 2017047412 A
- US 8557027 B